# NEUE EUROPÄISCHE PATENTSCHRIFT

(11) **EP 3 453 806 B2**
(45) Veröffentlichungstag und Bekanntmachung des Hinweises auf die Entscheidung über den Einspruch: **11.10.2023**
(45) Hinweis auf die Patenterteilung: 01.01.2020
(21) Anmeldenummer: 18187767.1
(22) Anmeldetag: 01.09.2017
(51) Int. Cl.: E04B 1/68, E06B 1/62

(54) **DICHTELEMENT**
SEAL ELEMENT
ÉLÉMENT D'ÉTANCHÉITÉ

(43) Veröffentlichungstag der Anmeldung: 13.03.2019
(62) Teilanmeldung aus: 17189098.1
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 1 983 121
- EP-A1- 2 620 565
- EP-A1- 2 620 565
- EP-A1- 2 990 552
- EP-A2- 2 666 947
- EP-A2- 3 375 597
- DE-A1- 19 641 415
- DE-A1-102017 105 323
- DE-U1-202011 000 091
- DE-U1-202012 005 049
- DE-U1-202012 101 990
- DE-U1-202012 104 454
- DE-U1-202013 100 308

## Beschreibung

Die vorliegende Erfindung betrifft ein Dichtelement mit mindestens zwei innenliegenden Sperrschichtabschnitten.

Von Dichtbandrollen abgewickelte Dichtbänder werden üblicherweise zum Abdichten von Fugen, beispielsweise zwischen einem Rahmenprofil eines Fensters oder einer Tür und einer Gebäudewand verwendet, um die Fugen gegen Luftzug und Schlagregen abzudichten. Zusätzlich vorgesehene Folien an einer Seitenfläche des Dichtbands erhöhen zudem die Dampfundurchlässigkeit desselben, siehe z.B. EP 0 072 955 A1 oder EP 1 936 246 A1. Da diese Folien, die außen am Dichtband angebracht sind, den Nachteil aufweisen, dass sie beim Transport oder Einbau des Dichtbands beschädigt werden können, ist man dazu übergegangen, die eine Sperrschicht bildenden Folien innerhalb eines Dichtbands anzuordnen.

Zum Herstellen von Dichtbändern mit innenliegenden Sperrschichten sind verschiedene Verfahren bekannt, bei denen Folien oder ähnliche eine Sperrschicht bildende Materialien in ein Dichtband eingebracht werden. Beispielsweise beschreibt die EP 2 990 553 A1 ein Verfahren, bei dem mindestens zwei Schaumstoffstreifen bereitgestellt werden. Einer der Schaumstoffstreifen ist an einer seiner Seitenflanken mit einem Folienstreifen, einem Klebebandstreifen oder einem klebstoffartigen flüssigen Medium versehen. Die beiden Schaumstoffstreifen werden anschließend derart zusammengeführt, dass eine Schaumstoff-Sperrschicht-Bahn entsteht, bei der eine aus dem Folienstreifen, dem Klebebandstreifen oder dem klebstoffartigen flüssigen Medium hervorgegangene Sperrschicht zwischen aneinandergrenzenden Schaumstoffstreifen angeordnet ist. Bei diesem Verfahren hat es sich als nachteilig erwiesen, dass mit dem Bereitstellen einzelner Schaumstoffstreifen, die mit einem Sperrschicht-Material versehen sind, ein verhältnismäßig großer Aufwand verbunden ist. Dieser Aufwand nimmt entsprechend zu, je mehr Sperrschichten das Dichtband aufweisen soll.

Die EP 2 990 552 A1 beschreibt ein ähnliches Verfahren zur Herstellung eines Dichtbandes. Dieses Dichtband offenbart die Merkmale des Oberbegriffs des Anspruchs 1.

Die EP 2 990 551 A1 beschreibt ein alternatives Verfahren zur Herstellung von Dichtbandrollen mit einer innenliegenden Sperrschicht. Bei diesem wird zunächst eine Schaumstoffbahn bereitgestellt. Anschließend wird in die Schaumstoffbahn in Längsrichtung eine Mehrzahl von Schnitten eingebracht, um parallel verlaufende Schaumstoffstreifen zu bilden. In jeden durch die Schnitte erzeugten Zwischenraum zwischen zwei benachbarten Schaumstoffstreifen wird dann ein Folienstreifen, ein Klebebandstreifen oder ein klebstoffartiges flüssiges Medium eingebracht. Alle Schaumstoffstreifen werden zur Herstellung einer Schaumstoff-Sperrschicht-Bahn, bei der sich die Schaumstoffstreifen und die mindestens eine Sperrschicht abwechseln, verbunden. Dabei ist es mitunter schwierig, das Sperrschicht-Material in die sehr engen Zwischenräume zuverlässig einzubringen und sicherzustellen, dass das Material gleichmäßig über die gesamte Höhe der Schaumstoffbahn bzw. der Schaumstoffstreifen verteilt ist. Eine Kontrolle der eingebrachten Sperrschicht nach dem Einbringen des Materials ist nur schwer möglich. Zudem müssen aufwändige Umlenkeinrichtungen vorgesehen werden, um beispielsweise einen Folienstreifen in einen durch einen Schnitt gebildeten Zwischenraum einzubringen.

Aus der DE 20 2013 100 308 U1 ist ein Dichtband bekannt, bei dem ein erhöhter Wasserdampfdiffusionswiderstand im Gegensatz zu den zuvor beschriebenen Dichtbändern dadurch erreicht wird, dass ein Teil des Dichtbands nach dem Einbau in eine abzudichtende Fuge stärker komprimiert wird, als das übrige Dichtband. Dies wird dadurch erreicht, dass das Dichtband in Längsrichtung zumindest einen Einschnitt aufweist, der das Dichtband in zwei Abschnitte unterteilt, die mittels eines Schaumstoffstegs verbunden sind. Vor dem Einbau des Dichtbands wird einer der beiden Abschnitte entlang des Schaumstoffstegs auf den anderen Abschnitt umgeklappt, sodass die Abschnitte flächig aufeinander zu liegen kommen. In dem Bereich der übereinander angeordneten Dichtbandabschnitte weist das Dichtband folglich die doppelte Höhe auf und wird in der Einbaulage somit doppelt so stark komprimiert. Die übereinander angeordneten Dichtbandabschnitte können durch einen Klebebandabschnitt miteinander verbunden sein.

Der vorliegenden Erfindung liegt die Aufgabe zugrunde, ein Dichtelement bereitzustellen, das einfach, kostengünstig und zuverlässig herstellbar ist.

Diese Aufgabe wird durch die Merkmale des Anspruchs 1 gelöst.

Ein erfindungsgemäßes Dichtelement weist eine Oberseite, eine Unterseite und zwei die Oberseite und die Unterseite verbindende Seitenflanken auf und umfasst mindestens drei Dichtbandabschnitte, die in einer Funktionsrichtung des Dichtelements nebeneinander angeordnet sind, wobei sich die Funktionsrichtung parallel zu der Oberseite und der Unterseite sowie senkrecht zu den Seitenflanken erstreckt, und mindestens einen ersten Sperrschichtabschnitt und mindestens einen zweiten Sperrschichtabschnitt, die jeweils zwischen zwei aneinander angrenzenden Dichtbandabschnitten aufgenommen sind. Der mindestens eine erste Sperrschichtabschnitt und der mindestens eine zweite Sperrschichtabschnitt sind dazu eingerichtet, den Durchtritt von Luft und/oder Wasserdampf durch das Dichtelement zu reduzieren. Zudem verbinden der mindestens eine erste Sperrschichtabschnitt und der mindestens eine zweite Sperrschichtabschnitt jeweils die angrenzenden Dichtbandabschnitte miteinander und verlaufen parallel zu den Seitenflanken im Dichtelement. Der mindestens eine erste Sperrschichtabschnitt und der mindestens eine zweite Sperrschichtabschnitt bilden jeweils eine Schlaufe zwischen den angrenzenden Dichtbandabschnitten, wobei der mindestens eine erste Sperrschichtabschnitt die Schlaufe im Bereich der Unterseite des Dichtelements bildet und der mindestens eine zweite Sperrschichtabschnitt die Schlaufe im Bereich der Oberseite des Dichtelements bildet.

Auf diese Weise wird ein Dichtband bereitgestellt, das sich besonders einfach und kostengünstig herstellen lässt, indem die Dichtbandabschnitte im Bereich von Verbindungsabschnitten umgeklappt werden. Dabei werden zuvor gebildete Sperrschichtabschnitte innerhalb des Dichtelements angeordnet. Beim Umklappen der Dichtbandabschnitte im Bereich der Verbindungsabschnitte entsteht die Schlaufe im mindestens einen ersten bzw. im mindestens einen zweiten Sperrschichtabschnitt.

Erfindungsgemäß weist das Dichtelement mehrere erste und/oder mehrere zweite Sperrschichtabschnitte auf, wobei sich in Funktionsrichtung betrachtet immer ein erster Sperrschichtabschnitt und ein zweiter Sperrschichtabschnitt abwechseln. So können auch Dichtelemente größerer Breite mit einer Mehrzahl von innenliegenden Sperrschichtabschnitten bereitgestellt werden.

Es ist bevorzugt, dass der mindestens eine erste Sperrschichtabschnitt und der mindestens eine zweite Sperrschichtabschnitt eine Folie aufweisen. Eine Folie eignet sich besonders gut zum Bilden eines Verbindungsabschnitts zwischen zwei Dichtbandabschnitten sowie zum Bilden einer Sperrschicht innerhalb des Dichtelements. Vor allem lassen sich mit Folien die Dichteigenschaften des Dichtelements, insbesondere der Wasserdampfdiffusionswiderstand, gut an die gegebenen Anforderungen anpassen.

Jede Schlaufe weist vorzugsweise zwei im Wesentlichen parallel verlaufende Schenkel und eine die Schenkel verbindende Krümmung auf, wobei die zwei Schenkel miteinander verhaftet sind. Dadurch werden die an die Schlaufe angrenzenden Dichtbandabschnitte sicher miteinander verbunden.

Ein beispielhaftes Verfahren zum Herstellen des Dichtelements, das zu einer Dichtbandrolle aus weichem, komprimierbarem Schaumstoff mit mindestens einer in radialer Richtung verlaufenden Sperrschicht, die axial zwischen zwei Schichten aus Schaumstoff angeordnet ist, aufgewickelt ist, weist folgende Schritte auf:
- Bereitstellen einer Schaumstoffbahn aus einem weichen Schaumstoff;
- Aufbringen einer ersten Sperrschicht auf eine erste Fläche der Schaumstoffbahn;
- Einbringen mindestens eines ersten Schnitts in die erste Fläche der Schaumstoffbahn in einer Längsrichtung der Schaumstoffbahn und Einbringen mindestens eines zweiten Schnitts in eine der ersten Fläche gegenüberliegende zweite Fläche der Schaumstoffbahn in einer Längsrichtung der Schaumstoffbahn, sowie in einer Querrichtung der Schaumstoffbahn versetzt zum mindestens einen ersten Schnitt, zur Bildung von parallel verlaufenden Dichtbandstreifen, wobei zwischen zwei aneinander angrenzenden Dichtbandstreifen ein Verbindungsabschnitt verbleibt;
- Umklappen der Dichtbandstreifen im Bereich der Verbindungsabschnitte zur Herstellung einer Schaumstoff-Sperrschicht-Bahn derart, dass sich Teilabschnitte der ersten Fläche, die jeweils an einen gemeinsamen Verbindungsabschnitt angrenzen, gegenüberliegen, und sich Teilabschnitte der zweiten Fläche, die jeweils an einen gemeinsamen Verbindungsabschnitt angrenzen, gegenüberliegen; und
- (i) Aufwickeln der Schaumstoff-Sperrschicht-Bahn zu einer Dichtbandrolle mit mindestens einer in radialer Richtung verlaufenden Sperrschicht, oder
- (ii) Aufwickeln der Schaumstoff-Sperrschicht-Bahn zu einer Zwischenrolle und Durchtrennen der Zwischenrolle an einer oder an mehreren Stellen in axialer Richtung, um eine Mehrzahl von Dichtbandrollen mit jeweils mindestens einer in radialer Richtung verlaufenden Sperrschicht zu erzeugen, die weniger breit sind als die Zwischenrolle, oder
- (iii) Einbringen mindestens eines Schnitts in die Schaumstoff-Sperrschicht-Bahn in einer Längsrichtung der Schaumstoff-Sperrschicht-Bahn zur Bildung von Schaumstoff-Sperrschicht-Streifen und Aufwickeln der Schaumstoff-Sperrschicht-Streifen zu einzelnen Dichtbandrollen mit jeweils mindestens einer in radialer Richtung verlaufenden Sperrschicht.

Ein "erster Schnitt" ist dabei ein Schnitt, der in die erste Fläche der Schaumstoffbahn eingebracht wird. Ein "zweiter Schnitt" ist ein Schnitt, der in die zweite Fläche der Schaumstoffbahn eingebracht wird. Durch die Angaben "erster" und "zweiter" soll keine zeitliche Reihenfolge des Einbringens der Schnitte in die Schaumstoffbahn festgelegt sein. So kann beispielsweise das Einbringen eines zweiten Schnitts auch vor dem Einbringen eines ersten Schnitts erfolgen. Es können auch alle Schnitte gleichzeitig in die Schaumstoffbahn eingebracht werden.

Durch dieses Verfahren kann eine Sperrschicht einfach, effizient und gut kontrollierbar auf eine Schaumstoffbahn aufgebracht werden und im Anschluss durch Schneiden und Umklappen der einzelnen Dichtbandstreifen entlang der Verbindungsabschnitte im Inneren einer Schaumstoff-Sperrschicht-Bahn angeordnet werden. Zugleich bedarf es keines wesentlich erhöhten Aufwands, um eine Vielzahl von Schaumstoffstreifen mit Sperrschichten zu versehen und so Schaumstoff-Sperrschicht-Bahnen mit einer beliebigen Anzahl innenliegender Sperrschichten herzustellen, aus denen wiederum Dichtbandrollen mit einer beliebigen Anzahl von innenliegenden Sperrschichten einfach gebildet werden können.

Das Verfahren umfasst ferner das Aufbringen einer zweiten Sperrschicht auf die zweite Fläche der Schaumstoffbahn. Die zweite Sperrschicht kann ebenso einfach, effizient und gut kontrollierbar wie die erste Sperrschicht auf die Schaumstoffbahn aufgebracht werden und ermöglicht so auf einfache Art und Weise das Erhöhen der Anzahl an innenliegenden Sperrschichten in der Schaumstoff-Sperrschicht-Bahn. Die zweite Sperrschicht kann dabei aus demselben Material wie die erste Sperrschicht oder aus einem anderen Material gebildet sein.

Es ist weiterhin bevorzugt, dass mindestens zwei erste Schnitte und/oder mindestens zwei zweite Schnitte derart in die Schaumstoffbahn eingebracht werden, dass in Querrichtung der Schaumstoffbahn betrachtet abwechselnd ein erster Schnitt und ein zweiter Schnitt in die Schaumstoffbahn eingebracht sind. Das bedeutet, dass in Querrichtung der Schaumstoffbahn ein zweiter Schnitt zwischen zwei ersten Schnitten und/oder ein erster Schnitt zwischen zwei zweiten Schnitten angeordnet ist. Dadurch wird erreicht, dass nach dem Umklappen der Dichtbandstreifen eine Schaumstoff-Sperrschicht-Bahn erzielt wird, bei der sich die Teilabschnitte der ersten Fläche, die jeweils an einen gemeinsamen Verbindungsabschnitt angrenzen, gegenüberliegen, und sich die Teilabschnitte der zweiten Fläche, die jeweils an einen gemeinsamen Verbindungsabschnitt angrenzen, gegenüberliegen.

Vorzugsweise werden der mindestens eine erste Schnitt und der mindestens eine zweite Schnitt in Querrichtung der Schaumstoffbahn in gleichmäßigen Abständen zueinander eingebracht, um Dichtbandstreifen gleicher Breite zu erzeugen. Nach dem Umklappen der Dichtbandstreifen im Bereich der Verbindungsabschnitte weist die Schaumstoff-Sperrschicht-Bahn dadurch eine gleichmäßige Höhe bzw. Dicke auf und eignet sich gut zur weiteren Verarbeitung zu einer Dichtbandrolle. Es versteht sich, dass die Schnitte jedoch auch in ungleichmäßigen Abständen zueinander eingebracht werden können, um auf diese Weise eine profilierte Schaumstoff-Sperrschicht-Bahn zu erzeugen.

In einer Ausführungsform, bei der auf der zweiten Fläche eine zweite Sperrschicht aufgebracht ist, kann der mindestens eine erste Schnitt die Schaumstoffbahn vollständig durchtrennen, so dass der mindestens eine Verbindungsabschnitt im Bereich der zweiten Fläche allein durch die zweite Sperrschicht gebildet wird. Der mindestens eine zweite Schnitt durchtrennt die Schaumstoffbahn in diesem Fall nicht vollständig, so dass der mindestens eine Verbindungsabschnitt im Bereich der ersten Fläche einen Schaumstoffsteg umfasst.

Alternativ durchtrennt der mindestens eine erste Schnitt die Schaumstoffbahn nicht vollständig, so dass der mindestens eine Verbindungsabschnitt im Bereich der zweiten Fläche einen Schaumstoffsteg umfasst, und der mindestens eine zweite Schnitt durchtrennt die Schaumstoffbahn vollständig, so dass der mindestens eine Verbindungsabschnitt im Bereich der ersten Fläche allein durch die erste Sperrschicht gebildet wird. Dabei kann auf der zweiten Fläche wahlweise eine zweite Sperrschicht aufgebracht sein oder nicht.

In einer weiteren alternativen Ausführungsform durchtrennen der mindestens eine erste Schnitt und der mindestens eine zweite Schnitt die Schaumstoffbahn nicht vollständig, so dass der mindestens eine Verbindungsabschnitt im Bereich der ersten Fläche einen Schaumstoffsteg umfasst und der mindestens eine Verbindungsabschnitt im Bereich der zweiten Fläche ebenfalls einen Schaumstoffsteg umfasst. Dabei kann auf der zweiten Fläche wahlweise eine zweite Sperrschicht aufgebracht sein oder nicht.

Schließlich durchtrennen in einer alternativen Ausführungsform, bei der auf der zweiten Fläche eine zweite Sperrschicht aufgebracht ist, der mindestens eine erste Schnitt und der mindestens eine zweite Schnitt die Schaumstoffbahn jeweils vollständig, so dass der mindestens eine Verbindungsabschnitt im Bereich der ersten Fläche allein durch die erste Sperrschicht gebildet wird und der mindestens eine Verbindungsabschnitt im Bereich der zweiten Fläche allein durch die zweite Sperrschicht gebildet wird.

Es ist ersichtlich, dass hier eine Vielzahl von Variationsmöglichkeiten besteht, aus denen der Fachmann wählen kann. So können mit einfachen Mitteln die Eigenschaften der Schaumstoff-Sperrschicht-Bahn, insbesondere hinsichtlich der Anzahl und Anordnung der Sperrschichten, der Verteilung der Sperrschichten innerhalb der Schaumstoff-Sperrschicht-Bahn und deren Erstreckung durch die Schaumstoff-Sperrschicht-Bahn beliebig angepasst werden, ohne das Herstellungsverfahren wesentlich zu erschweren.

Je nach Tiefe des mindestens einen ersten Schnitts bzw. des mindestens einen zweiten Schnitts verbleibt wahlweise ein Schaumstoffsteg zwischen zwei aneinandergrenzenden Schaumstoffstreifen, dessen Höhe wählbar ist. Um ein einfaches Umklappen der Dichtbandstreifen entlang der Verbindungsabschnitte zu ermöglichen, sind die Verbindungsabschnitte möglichst dünn zu gestalten. Die dünnstmöglichen Verbindungsabschnitte werden nur durch die erste und/oder die zweite Sperrschicht gebildet. Da diese aber schon bei geringfügigen Abweichungen beim Schneidvorgang durchtrennt werden können, bietet es sich an, zusätzlich dünne Schaumstoffstege beim Einschneiden stehen zu lassen, die zu den Verbindungsabschnitten beitragen.

Vorzugsweise weist der mindestens eine Schaumstoffsteg dabei eine Höhe von maximal 10 mm, mehr bevorzugt von maximal 5 mm und noch mehr bevorzugt von maximal 1 bis 2 mm auf.

In einer bevorzugten Ausführungsform umfasst das Verfahren den Schritt des Aufbringens eines Zusatzmaterials, wobei das Zusatzmaterial auf die erste Fläche der Schaumstoffbahn und/oder die zweite Fläche der Schaumstoffbahn und/oder die erste Sperrschicht und/oder die zweite Sperrschicht aufgebracht wird. Das Zusatzmaterial kann dem Dichtband spezielle Eigenschaften verleihen.

Vorzugsweise erfolgt das Durchtrennen der Zwischenrolle nach Alternative ii) und das Einbringen des mindestens einen Schnitts nach Alternative iii) jeweils in einem Schaumstoffstreifen der Zwischenrolle bzw. in einem Schaumstoffstreifen der Schaumstoff-Sperrschicht-Bahn. Ein Beschädigen der mindestens einen innenliegenden Sperrschicht wird auf diese Weise vermieden.

Bevorzugt umfasst das Verfahren das Verbinden der mit der ersten Sperrschicht oder der zweiten Sperrschicht versehenen und einander jeweils gegenüberliegenden Teilabschnitte der ersten bzw. der zweiten Fläche der Dichtbandstreifen nach dem Umklappen. So kann eine zusammenhängende Schaumstoff-Sperrschicht-Bahn geschaffen werden, bei der im weiteren Verlauf des Verfahrens nicht die Gefahr besteht, dass die Dichtbandstreifen ungewünscht zurückklappen. Die weitere Verarbeitung wird dadurch vereinfacht. Außerdem wird durch das Verbinden der Dichtbandstreifen sichergestellt, dass auch die daraus später hergestellten Dichtbandrollen einen ausreichenden Zusammenhalt in axialer Richtung aufweisen.

Dabei ist es bevorzugt, dass vor dem Verbinden der Dichtbandstreifen das Erwärmen der Dichtbandstreifen erfolgt, so dass die Haftfähigkeit der ersten Sperrschicht und/oder der zweiten Sperrschicht zum Verbinden der Dichtbandstreifen erhöht wird, wobei das Erwärmen vorzugsweise vor dem Umklappen der Dichtbandstreifen erfolgt. Dadurch wird das Material der ersten Sperrschicht und/oder der zweiten Sperrschicht in einen Zustand versetzt, in dem es sich dazu eignet, die jeweils angrenzenden Schaumstoffstreifen miteinander zu verbinden. Insbesondere nach dem Abkühlen der Sperrschichten ist vorzugsweise ohne ein zusätzliches Verbindungsmaterial, wie z.B. einen Klebstoff, ein Zusammenhalt zwischen den Schaumstoffstreifen geschaffen. Das Erwärmen vor dem Umklappen der Dichtbandstreifen bietet den Vorteil, dass die erste und/oder die zweite Sperrschicht großflächig und gleichmäßig auf der Schaumstoffbahn erwärmt werden kann. Es ist aber auch denkbar, die Dichtbandstreifen nach dem Umklappen derselben zu erwärmen. Dabei können nur Abschnitte der ersten und/oder der zweiten Sperrschicht entsprechend erhitzt werden, die im Randbereich der Schaumstoff-Sperrschicht-Bahn angeordnet sind. Das Erwärmen kann aber auch derart erfolgen, dass die erste und/oder zweite Sperrschicht im Inneren der Schaumstoff-Sperrschicht-Bahn entsprechend erwärmt wird. Bevorzugt umfasst der Schritt des Verbindens auch den Schritt, die Schaumstoffstreifen zumindest leicht aneinander zu drücken.

Schließlich kann eine Klebeschicht auf einer quer zu den Sperrschichten angeordneten Fläche der Schaumstoff-Sperrschicht-Bahn oder der Schaumstoff-Sperrschicht-Streifen aufgebracht werden. Vorzugsweise wird diese Klebeschicht durch ein doppelseitiges Klebeband gebildet, das auf einer Außenseite mit einer abziehbaren Schutzfolie bedeckt ist. Die Klebeschicht erhöht den Zusammenhalt der Dichtbandstreifen und führt vorteilhafterweise dazu, dass die daraus später hergestellten Dichtbandrollen eine außenliegende Klebeschicht aufweisen, mittels derer sie am Rahmenprofil eines Fenster- oder Türrahmens einfach und schnell anzubringen sind.

Weitere Merkmale und Vorteile der vorliegenden Erfindung ergeben sich aus der nachfolgenden Beschreibung unter Bezugnahme auf die Zeichnungen.
- Fig. 1a: zeigt beispielhaft den Schritt des Aufbringens einer ersten Sperrschicht auf eine erste Fläche einer Schaumstoffbahn;
- Fig. 1b: zeigt eine schematische Querschnittsansicht einer Schaumstoffbahn, auf die eine erste und eine zweite Sperrschicht aufgebracht sind;
- Fig. 2: zeigt in einer schematischen Querschnittsansicht den Schritt des Einbringens erster und zweiter Schnitte in die Schaumstoffbahn aus Fig. 1b;
- Fig. 3: zeigt in einer schematischen Querschnittsansicht den Schritt des Umklappens der beim Schneiden erzeugten Dichtbandstreifen aus Fig. 2;
- Fig. 4: zeigt eine schematische Querschnittsansicht einer durch Umklappen gemäß Fig. 3 erzeugten Schaumstoff-Sperrschicht-Bahn;
- Fig. 5a: zeigt in einer schematischen Querschnittsansicht den Schritt des Aufwickelns der Schaumstoff-Sperrschicht-Bahn aus Fig. 4 zu einer Dichtbandrolle;
- Fig. 5b: zeigt in einer schematischen Querschnittsansicht den Schritt des Durchtrennens einer aus der Schaumstoff-Sperrschicht-Bahn aus Fig. 4 gebildeten Zwischenrolle zum Erzeugen einer Mehrzahl von Dichtbandrollen in einer alternativen Ausführungsform des Verfahrens;
- Fig. 5c: zeigt in einer schematischen Querschnittsansicht den Schritt des Einbringens eines Schnitts in die Schaumstoff-Sperrschicht-Bahn aus Fig. 4 und des Aufwickelns von Schaumstoff-Sperrschicht-Streifen zu einzelnen Dichtbandrollen in einer weiteren alternativen Ausführungsform des Verfahrens;
- Fig. 6: zeigt in einer schematischen Querschnittsansicht den Schritt des Einbringens erster und zweiter Schnitte in eine Mehrzahl von übereinander angeordneten Schaumstoffbahnen gemäß einer alternativen Ausführungsform des Verfahrens;
- Fig. 7: zeigt in einer schematischen Querschnittsansicht den Schritt des Umklappens der beim Schneiden erzeugten Dichtbandabschnitte aus Fig. 6; und
- Fig. 8: zeigt eine schematische Querschnittsansicht einer durch Umklappen gemäß Fig. 7 erzeugten Schaumstoff-Sperrschicht-Bahn mit einer Detailansicht eines Verbindungsabschnitts.

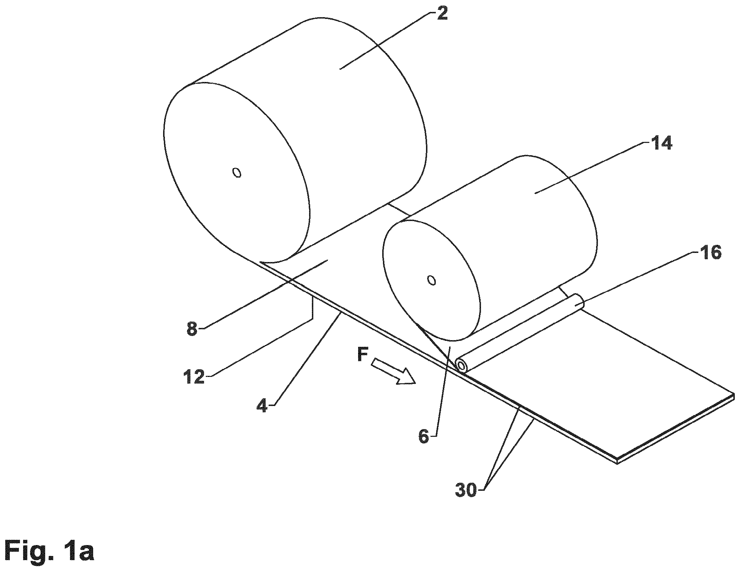

In Fig. 1a sind die ersten Schritte eines Ausführungsbeispiels des Verfahrens dargestellt. Auf einer Ausgangsrolle 2 wird ein weicher Schaumstoff in Form einer aufgewickelten Schaumstoffbahn 4 bereitgestellt. Der weiche Schaumstoff wird auf der Ausgangsrolle 2 in großen Längen von bis zu 500 m, vorzugsweise zwischen 3 und 300 m, mehr bevorzugt zwischen 5 und 200 m bereitgestellt. Als Schaumstoffe können alle bekannten offenzelligen, gemischtzelligen oder geschlossenzelligen Weichschaumstoffe aus z.B. Polyurethan, Polyethylen, Polyvinylchlorid oder Polypropylen verwendet werden, die nach Kompression eine Rückstellung vollziehen. Die Schaumstoffbahn 4 kann vor der weiteren Bearbeitung bereits zur verzögerten Rückstellung auf bekannte Art und Weise imprägniert werden.

Durch Bereitstellung auf der Ausgangsrolle 2 kann die Schaumstoffbahn 4 besonders gut transportiert und verarbeitet werden. In der Regel befindet sich die Schaumstoffbahn 4 auf der Ausgangsrolle 2 in einem nicht oder nur geringfügig komprimierten Zustand. Es ist auch möglich, dass sich die Schaumstoffbahn 4 auf der Ausgangsrolle 2 in einem komprimierten Zustand befindet, allerdings muss dann nach dem Abwickeln von der Ausgangsrolle eine rechtzeitige Rückstellung des Schaumstoffmaterials im Prozessablauf sichergestellt sein. Die Breite der Schaumstoffbahn 4 liegt üblicherweise zwischen 1 cm und 5 m, vorzugsweise zwischen 0,5 m und 1,5 m. Die Höhe der Schaumstoffbahn 4 beträgt im entspannten Zustand üblicherweise zwischen 5 mm und 30 cm, vorzugsweise zwischen 10 mm und 10 cm.

Nach dem Abwickeln von der Ausgangsrolle 2 wird die Schaumstoffbahn 4 entlang einer Förderrichtung bewegt, die durch den Pfeil F gekennzeichnet ist. Anschließend wird eine erste Sperrschicht 6 auf eine erste Fläche 8 der Schaumstoffbahn 4 aufgebracht, um so eine kaschierte Schaumstoffbahn zu bilden. In der dargestellten Ausführungsform ist die erste Fläche durch die oben liegende Oberfläche der Schaumstoffbahn 4 gebildet.

Weiterhin wird nach dem Abwickeln von der Ausgangsrolle 2 auch eine zweite Sperrschicht 10 (nicht dargestellt) auf eine der ersten Fläche 8 gegenüberliegenden zweite Fläche 12 der Schaumstoffbahn 4 aufgebracht. Die zweite Fläche 12 entspricht im vorliegenden Fall der Unterseite der Schaumstoffbahn 4. Das Verfahren wird nachfolgend unter Bezugnahme auf eine Ausführungsform beschrieben, bei der eine erste Sperrschicht 6 und eine zweite Sperrschicht 10 vorgesehen sind.

In der in Fig. 1a dargestellten Ausführungsform ist die erste Sperrschicht 6 durch eine Folienbahn gebildet, die auf einer Folienvorratsrolle 14 bereitgestellt ist. Ebenso kann die zweite Sperrschicht 10 durch eine Folienbahn gebildet sein, die ebenfalls auf einer Folienvorratsrolle bereitgestellt ist. Vorzugsweise wird die als Folienbahn ausgebildete erste Sperrschicht 6 von oben auf die erste Fläche 8 der Schaumstoffbahn 4 aufgebracht. Die zweite Sperrschicht 10 wird dann entsprechend von unten auf die zweite Fläche 12 der Schaumstoffbahn 4 aufgebracht. Das Aufbringen der ersten Sperrschicht 6 und der zweiten Sperrschicht 10 erfolgt in der Regel im Bereich einer Verbindungseinheit, die schematisch durch die Walze 16 dargestellt ist. Das Aufbringen der ersten Sperrschicht 6 und der zweiten Sperrschicht 10 umfasst in der Regel das Verbinden der jeweiligen Sperrschicht 6, 10 mit der Schaumstoffbahn 4, wobei der Verbindungsschritt wiederum einen Schritt der Wärmeaufbringung und/oder einen Schritt, die Sperrschicht 6, 10 und die Schaumstoffbahn 4 aneinander zu drücken, umfasst. Bei der Verwendung einer Folienbahn erfolgt die Verbindung mit der Schaumstoffbahn 4 in der Verbindungseinheit vorzugsweise durch Laminieren.

Die erste Sperrschicht 6 und die zweite Sperrschicht 10 können jeweils auch durch eine Bahn eines einseitig oder beidseitig klebenden Klebebands gebildet sein. Die klebende Seite eines solchen Klebebands ist dann in der Regel mit einer Abziehfolie versehen, die kurz vor dem Aufbringen auf die Schaumstoffbahn 4 abgelöst wird. Ebenso können die erste Sperrschicht 6 und die zweite Sperrschicht 10 durch eine Folienbahn gebildet sein, die selbst eine Schicht eines Klebebands oder eine feste Schicht eines Schmelzklebers umfasst. Schließlich kann zur Bildung der ersten Sperrschicht 6 und der zweiten Sperrschicht 10 auch ein klebstoffartiges flüssiges Medium mittels Düsen (z.B. Schmelzdüse, Flachdüse, Mischdüse) oder über Walzenauftrag (Transferwalze) auf die Schaumstoffbahn 4 aufgebracht werden. Je nach Klebstoff kann anschließend vorzugsweise in einer Verbindungseinheit, eine Verbindung mit der Schaumstoffbahn 4 stattfinden, wobei der Klebstoff in der Regel verfestigt wird. Es kommen grundsätzlich chemische und physikalische Arten der Verfestigung in Frage. Auch hier wird die Verbindung der ersten Sperrschicht 6 bzw. der zweiten Sperrschicht 10 mit der Schaumstoffbahn 4 in der Regel wieder einen Schritt der Wärmeaufbringung und/oder einen Schritt, die erste Sperrschicht 6 bzw. die zweite Sperrschicht 10 und die Schaumstoffbahn 4 aneinander zu drücken, umfassen. Es ist auch möglich, auf eine Folienbahn einseitig einen Sprühkleber aufzubringen und diese Kombination als erste Sperrschicht 6 und zweite Sperrschicht 10 zu verwenden. Schließlich kann als Sperrschicht 6, 10 auch eine Haut des Schaumstoffmaterials der Schaumstoffbahn 4 selbst dienen, wenn die Schaumstoffbahn 4 auf der entsprechenden Seite angeschmolzen wird und danach wieder verhärtet oder wenn die Schaumstoffbahn 4 fertigungsbedingt eine Haut aufweist.

Jeder oben genannte Schritt der Wärmeaufbringung erfolgt mittels einer Heizvorrichtung, die üblicherweise als Warmluftgebläse ausgestaltet ist. Es kommt aber auch Strahlungserhitzung in Frage, beispielsweise mittels einer Infrarotheizung oder Mikrowellenheizung.

Des Weiteren ist es denkbar, die erste Sperrschicht 6 und die zweite Sperrschicht 10 nur teilweise auf die entsprechende erste Fläche 8 bzw. zweite Fläche 12 aufzubringen. Die erste und die zweite Sperrschicht 6, 10 können auch jeweils mehrteilig ausgebildet sein und die erste und die zweite Fläche 8, 12 vollständig oder teilweise bedecken. Beispielsweise können einzelne Streifen einer Sperrschicht in Längsrichtung auf die erste und/oder die zweite Fläche 8, 12 aufgebracht werden. Zudem ist es möglich für die erste und die zweite Sperrschicht 6, 10 unterschiedliche Materialien zu verwenden. Ist die erste bzw. die zweite Sperrschicht 6, 10 mehrteilig ausgebildet, können auch die einzelnen Bestandteile der ersten bzw. der zweiten Sperrschicht 6, 10 aus unterschiedlichen Materialen sein. Es wird auf diese Weise eine Vielzahl von Möglichkeiten bereitgestellt, die Eigenschaften gezielt auf die gegebenen Anforderungen anzupassen.

Die Funktion der ersten Sperrschicht 6 und der zweiten Sperrschicht 10 liegt vorzugsweise in einer Reduzierung oder Verhinderung des Durchtritts von Luft und/oder Wasserdampf. Die erste Sperrschicht 6 und die zweite Sperrschicht 10 können auch feuchtevariabel ausgebildet sein. Das heißt, dass sie ihren Wasserdampf-Diffusionswiderstand in Abhängigkeit der Umgebungsfeuchte ändern. Für die erste und die zweite Sperrschicht eignen sich insbesondere Kunststofffolien, bspw. aus Polyolefinen, Polyurethan, Polyvinylchlorid, Polystyrol, Polycarbonat, Polyamid oder ähnlichen Kunststoffen, wie auch Biokunststoffen, Mehrschichtfolien (Coex-Folien) aus verschiedenen Kunststoffen, physikalisch abbindende Klebstoffe, z.B. Dispersionsklebstoffe auf Acrylatbasis, Schmelzklebstoffe oder ähnliche Klebstoffe, Polykondensationsklebstoffe, z.B. Silikone, Hybridpolymer und ähnliche.

Es ist auch möglich, dass eine bereits mit einer ersten Sperrschicht 6 und/oder einer zweiten Sperrschicht 10 kaschierte Schaumstoffbahn 4, die vorher hergestellt wurde, zu der Ausgangsrolle 2 aufgewickelt ist.

Es kann weiterhin wünschenswert sein, ein Zusatzmaterial (nicht dargestellt) aufzubringen. Das Zusatzmaterial kann dabei bereits mit der ersten Sperrschicht 6 und/oder der zweiten Sperrschicht 10 verhaftet sein und so in einem Schritt mit der entsprechenden Sperrschicht 6, 10 auf die Schaumstoffbahn 4 aufgebracht werden. Alternativ kann das Zusatzmaterial vollflächig oder auch nur streifenförmig noch vor der ersten Sperrschicht 6 und der zweiten Sperrschicht 10 auf die erste Fläche 8 und/oder die zweite Fläche 12 der Schaumstoffbahn 4 aufgebracht werden. Das Zusatzmaterial kann auch erst nach der ersten Sperrschicht 6 und der zweiten Sperrschicht 10 außen vollflächig oder auch nur streifenförmig auf die jeweilige Sperrschicht 6, 10 aufgebracht werden. Als Zusatzmaterial kommen insbesondere Materialien zum Brandschutz (z.B. Blähgraffit, nicht brennbare Festkörper, CO₂-Emitter etc.), Materialien zur Isolierung (z.B. PU-Schaum, Harze, Dichtstoffe, etc.), Materialien zur Abdichtung gegen Feuchte (z.B. hydrophobe oder hydrophile Substanzen, bei Kontakt mit Wasser aufquellende Substanzen, etc.), Materialien zur Schallisolierung, Materialien zur kontrollierten Belüftung (z.B. Katalysatoren, etc.), Materialien für die Hygiene (z.B. Desinfektionsmittel, etc.) und/oder Materialien zur Auslösung der Expansion des Dichtbands (z.B. Treibmittel, Wärmequellen, etc.) in Frage. Dem Fachmann sind hier sowohl bezüglich der Anordnung sowie der Art und Eigenschaften des Zusatzmaterials Alternativen ersichtlich, die zum Erfüllen der jeweiligen Anforderungen einsetzbar sind.

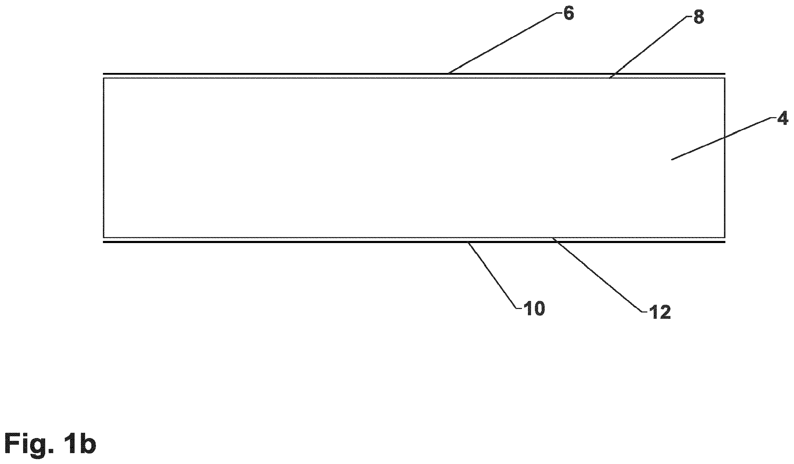

Fig. 1b zeigt eine schematische Querschnittsansicht der Schaumstoffbahn 4 nach dem Aufbringen der ersten Sperrschicht 6 auf die erste Fläche 8 und der zweiten Sperrschicht 10 auf die zweite Fläche 12 der Schaumstoffbahn 4.

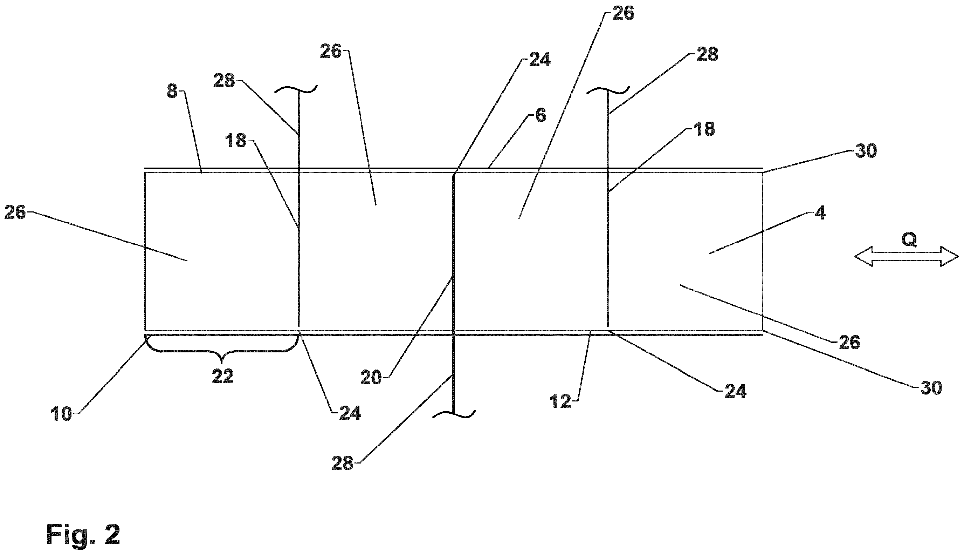

Im Folgenden sind die weiteren Schritte eines Ausführungsbeispiels des Verfahrens anhand der Fig. 2 bis 5 beschrieben, wobei in diesen Fällen eine erste und eine zweite Sperrschicht 6, 10 vorgesehen sind.

In Fig. 2 ist zu sehen, wie mindestens ein erster Schnitt 18 (hier zwei Schnitte 18) in die erste Fläche 8 der Schaumstoffbahn 4 in einer Längsrichtung der Schaumstoffbahn 4, die sich senkrecht zur Zeichenebene erstreckt, eingebracht wird. Mindestens ein zweiter Schnitt 20 (hier zwei zweite Schnitte 20) wird in die zweite Fläche 12 der Schaumstoffbahn 4 in Längsrichtung der Schaumstoffbahn 4, sowie in einer Querrichtung der Schaumstoffbahn 4 versetzt zum mindestens einen ersten Schnitt 18, eingebracht. Die Längsrichtung verläuft dabei parallel zur Förderrichtung F. Die Querrichtung der Schaumstoffbahn 4 ist in Fig. 2 durch den Pfeil Q gekennzeichnet. Wenn der Abschnitt der ersten Fläche 8 im Bereich des ersten Schnitts von der ersten Sperrschicht 6 bedeckt ist, wird diese logischerweise mit durchtrennt. Der gleiche Zusammenhang gilt für zweite Schnitte 20 in der zweiten Fläche 12 und die zweite Sperrschicht 10.

Durch das Einbringen des mindestens einen ersten Schnitts 18 und des mindestens einen zweiten Schnitts 20 werden parallel verlaufende Dichtbandstreifen 22 gebildet, wobei zwischen zwei aneinander angrenzenden Dichtbandstreifen 22 ein Verbindungsabschnitt 24 verbleibt. Jeder Dichtbandstreifen 22 wird durch einen Schaumstoffstreifen 26 sowie die an diesem angebrachten Teilabschnitte der ersten Sperrschicht 6 und der zweiten Sperrschicht 10 gebildet.

Der mindestens eine erste Schnitt 18 und der mindestens eine zweite Schnitt 20 werden vorzugsweise mittels Messer 28, mehr bevorzugt mittels paralleler Messer 28, in die Schaumstoffbahn 4 in Längsrichtung derselben und vorzugsweise parallel zu den Längskanten 30 der Schaumstoffbahn 4 eingebracht. Die Längskanten 30 sind dabei die Kanten der Schaumstoffbahn 4, die parallel zur Förderrichtung F und orthogonal zur axialen Richtung der Ausgangsrolle 2 verlaufen. Zum Einbringen des mindestens einen ersten Schnitts 18 und des mindestens einen zweiten Schnitts 20 in die Schaumstoffbahn 4 können neben den Messern 28 alle anderen dem Fachmann bekannten Verfahren zum Einschneiden von Schaumstoffbahnen 4 verwendet werden, wie z.B. Sägen.

Der mindestens eine erste Schnitt 18 und der mindestens eine zweite Schnitt 20 können die Schaumstoffbahn 4 jeweils entweder vollständig durchtrennen oder die Schaumstoffbahn 4 nicht vollständig durchtrennen, so dass zwischen den zwei angrenzenden Schaumstoffstreifen 26 ein Schaumstoffsteg verbleibt.

Der mindestens eine zweite Schnitt 20 kann unabhängig davon, ob eine zweite Sperrschicht 10 vorgesehen ist, die Schaumstoffbahn 4 vollständig durchtrennen oder nicht vollständig durchtrennen. Für den Fall, dass der mindestens eine zweite Schnitt 20 die Schaumstoffbahn 4 vollständig durchtrennt, wird der mindestens eine Verbindungsabschnitt 24 im Bereich der ersten Fläche 8 allein durch die erste Sperrschicht 6 gebildet. Durchtrennt der mindestens eine zweite Schnitt 20 die Schaumstoffbahn 4 nicht vollständig, wird der mindestens eine Verbindungsabschnitt 24 im Bereich der ersten Fläche 8 durch einen Schaumstoffsteg und die erste Sperrschicht 6 gebildet.

Bezüglich des mindestens einen ersten Schnitts 18 ist zu differenzieren, ob eine zweite Sperrschicht 10 vorgesehen ist oder nicht. Nur wenn die zweite Sperrschicht 10 auf die zweite Fläche 12 der Schaumstoffbahn 4 aufgebracht ist, kann der mindestens eine erste Schnitt 18 derart in die Schaumstoffbahn 4 eingebracht werden, dass er diese vollständig durchtrennt. Der mindestens eine Verbindungsabschnitt 24 im Bereich der zweiten Fläche 12 wird dann allein durch die zweite Sperrschicht 10 gebildet. Durchtrennt der mindestens eine erste Schnitt 18 die Schaumstoffbahn 4 nicht vollständig, sodass zwischen den angrenzenden Schaumstoffstreifen 26 ein Schaumstoffsteg verbleibt, umfasst der mindestens eine Verbindungsabschnitt 24 im Bereich der zweiten Fläche 12 diesen Schaumstoffsteg. Ist eine zweite Sperrschicht 10 vorhanden, so umfasst der mindestens eine Verbindungsabschnitt 24 im Bereich der zweiten Fläche 12 zusätzlich auch die zweite Sperrschicht 10.

In Hinblick auf die nachfolgenden Verfahrensschritte ist es bevorzugt, die Verbindungsabschnitte 24 möglichst dünn zu gestalten. Werden die Verbindungsabschnitte 24 nur durch die erste Sperrschicht 6 und die zweite Sperrschicht 10 gebildet, bilden diese im Bereich der Verbindungsabschnitte 24 eine Art Scharnierverbindung, die die beiden angrenzenden Schaumstoffstreifen 26 gelenkig miteinander verbindet. Auch ein Schaumstoffsteg zwischen den angrenzenden Schaumstoffstreifen 26 bildet eine solche Scharnierverbindung. Es ist jedoch zu berücksichtigen, dass mit zunehmender Höhe des Schaumstoffstegs das nachfolgende Umklappen der Dichtbandstreifen 22 im Bereich der Verbindungsabschnitte 24, die einen Schaumstoffsteg umfassen, erschwert wird. Falls Schaumstoffstege vorgesehen sind, weisen diese bevorzugt eine Höhe von maximal 10 mm, mehr bevorzugt von maximal 5 mm und noch mehr bevorzugt von maximal 1 bis 2 mm auf. Die Schaumstoffstege eignen sich insbesondere dazu, die erste Sperrschicht 6 und die zweite Sperrschicht 10 beim Einbringen des mindestens einen ersten Schnitts 18 und des mindestens einen zweiten Schnitts 20 vor Beschädigung zu schützen.

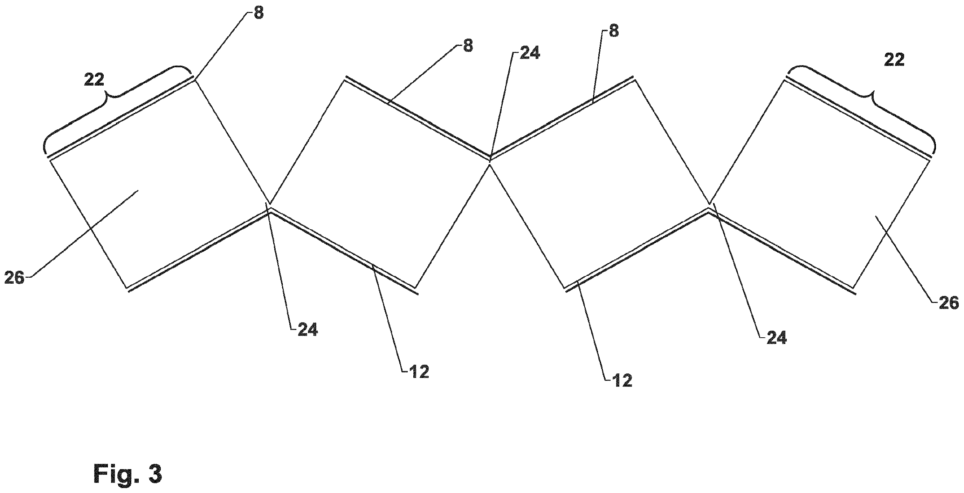

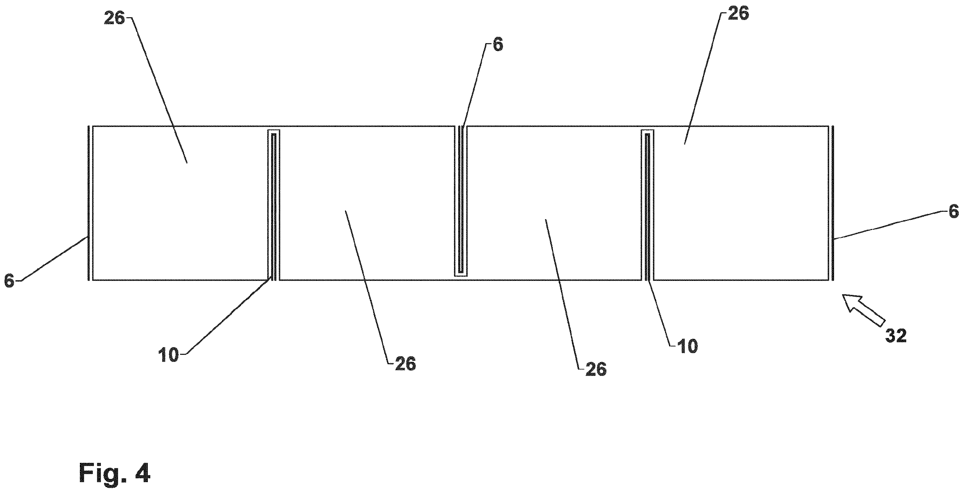

In Fig. 3 ist der Schritt des Umklappens der Dichtbandstreifen 22 im Bereich der Verbindungsabschnitte 24 zur Herstellung einer Schaumstoff-Sperrschicht-Bahn 32 zu sehen. Eine entsprechende Schaumstoff-Sperrschicht-Bahn 32 ist in Fig. 4 dargestellt.

Die Dichtbandstreifen 22, die durch einen zweiten Schnitt 20 voneinander getrennt sind, sind durch einen Verbindungsabschnitt 24 im Bereich der ersten Fläche 8 miteinander verbunden. Diese Dichtbandabschnitte 22 werden derart im Bereich dieser Verbindungsabschnitte 24 umgeklappt, dass sich die Teilabschnitte der ersten Fläche 8, die jeweils an einen gemeinsamen Verbindungsabschnitt 24 angrenzen, gegenüberliegen. D.h., dass die Teilabschnitte der ersten Sperrschicht 6 zweier aneinander angrenzender Dichtbandstreifen 22 mit einem gemeinsamen Verbindungsabschnitt 24 im Bereich der ersten Fläche 8 flächig aneinander zu liegen kommen.

Die Dichtbandstreifen 22, die durch einen ersten Schnitt 18 voneinander getrennt sind, sind durch einen Verbindungsabschnitt 24 im Bereich der zweiten Fläche 10 miteinander verbunden. Diese Dichtbandabschnitte 22 werden wiederum derart im Bereich dieser Verbindungsabschnitte 24 umgeklappt, dass sich die Teilabschnitte der zweiten Fläche 10, die jeweils an einen gemeinsamen Verbindungsabschnitt 24 angrenzen, gegenüberliegen. D.h., dass die Teilabschnitte der zweiten Sperrschicht 10 zweier aneinander angrenzender Dichtbandstreifen 22 mit einem gemeinsamen Verbindungsabschnitt 24 im Bereich der zweiten Fläche 12 flächig aneinander zu liegen kommen. Ist die zweite Sperrschicht 10 nicht vorgesehen, kommen entsprechend die Teilabschnitte der zweiten Fläche 10 zweier aneinander angrenzender Dichtbandstreifen 22 mit einem gemeinsamen Verbindungsabschnitt 24 im Bereich der zweiten Fläche 12 flächig aneinander zu liegen.

Das Umklappen der Dichtbandstreifen 22 im Bereich der Verbindungsabschnitte 24 erfolgt vorzugsweise, während die Schaumstoffbahn 4 bzw. die Dichtbandstreifen 22 weiter in Förderrichtung F transportiert werden. Es können dazu Mittel vorgesehen sein, um den mindestens einen ersten Schnitt 18 und den mindestens einen zweiten Schnitt 20 zu öffnen. Beispielsweise werden die in Querrichtung Q der Schaumstoffbahn 4 außen angeordneten Dichtbandstreifen 22 von den Mitteln gegriffen. Die Mittel ziehen die Schaumstoffbahn 4 dann in Querrichtung Q auseinander, um die Schnitte 18, 20 zu öffnen. Alternativ werden die Mittel in den mindestens einen ersten Schnitt 18 und den mindestens einen zweiten Schnitt 20 eingeführt und spreizen die angrenzenden Dichtbandstreifen 22 allmählich auseinander. Das vollständige Umklappen erfolgt in beiden Fällen durch geeignete Führungen, die beispielsweise einen entsprechenden Druck auf die gegenüberliegenden Flächen der Dichtbandstreifen 22 ausüben und so ein Umklappen der Dichtbandstreifen 22 bewirken.

In Fig. 4 ist die Schaumstoff-Sperrschicht-Bahn 32 schematisch dargestellt. Wie zu erkennen ist, bilden die nach innen geklappten Teilabschnitte der ersten Sperrschicht 6 nun Sperrschichten, die zwischen zwei aneinander angrenzenden Schaumstoffstreifen 26 aufgenommen sind. Ist die zweite Sperrschicht 10 vorgesehen, so bilden auch deren nach innen geklappte Teilabschnitte Sperrschichten, die jeweils zwischen zwei aneinander angrenzende Schaumstoffstreifen 26 aufgenommen sind. Ist die zweite Sperrschicht 10 nicht vorgesehen, so grenzen die nun einander gegenüberliegenden Teilabschnitte der zweiten Fläche 12 direkt aneinander an.

In Fig. 4 weist die Schaumstoff-Sperrschicht-Bahn 32 eine bevorzugte, im Wesentlichen ebene Gestalt auf. Dies wird dadurch erreicht, dass der mindestens eine erste Schnitt 18 und der mindestens eine zweite Schnitt 20 in Querrichtung Q der Schaumstoffbahn 4 in gleichmäßigen Abständen zueinander eingebracht werden, um Dichtbandstreifen 22 gleicher Breite zu erzeugen. Wie aus der Zusammenschau der Fig. 2 bis 4 hervorgeht, entspricht eine Breite der Dichtbandstreifen 22 in der Schaumstoffbahn 4 nach Fig. 2 nach dem Umklappen zur Schaumstoff-Sperrschicht-Bahn 32 nach Fig. 4 der Höhe der Dichtbandstreifen 22. Eine gleichmäßige Breite aller Dichtbandstreifen 22 der Schaumstoffbahn 4 führt somit zu einer gleichmäßigen Höhe der Dichtbandstreifen 22 der Schaumstoff-Sperrschicht-Bahn 32.

Es kann aber auch gewünscht sein, dass der mindestens eine erste Schnitt 18 und der mindestens eine zweite Schnitt 20 in Querrichtung Q der Schaumstoffbahn 4 in ungleichmäßigen Abständen zueinander eingebracht werden. Die Dichtbandstreifen 22 der Schaumstoffbahn 4 weisen dann unterschiedliche Breiten auf. Dies führt dazu, dass die Dichtbandstreifen 22 der Schaumstoff-Sperrschicht-Bahn 32 unterschiedliche Höhen haben, wodurch eine profilierte Schaumstoff-Sperrschicht-Bahn 32 entsteht. Es sind Anwendungsbereiche denkbar, in denen zusätzlich zu den innenliegenden Sperrschichten 6, 10 eine abschnittsweise erhöhte Kompression in einem Dichtband gewünscht ist, welches dann aus einer solchen profilierten Schaumstoff-Sperrschicht-Bahn 32 erzielt werden kann.

Des Weiteren ist es bezüglich einer vorteilhaften Gestalt der Schaumstoff-Sperrschicht-Bahn 32 bevorzugt, dass in Querrichtung Q der Schaumstoffbahn 4 betrachtet abwechselnd ein erster Schnitt 18 und ein zweiter Schnitt 20 in die Schaumstoffbahn 22 eingebracht sind, wenn mindestens zwei erste Schnitte 18 und/oder mindestens zwei zweite Schnitte 20 vorgesehen sind. Dadurch wird erreicht, dass die Dichtbandstreifen 22 nach dem Umklappen im Bereich der Verbindungsabschnitte 24 nebeneinander zu liegen kommen und sich nicht aufeinander stapeln. Dies trägt ebenso dazu bei, eine im Wesentlichen ebene Schaumstoff-Sperrschicht-Bahn 32 zu bilden.

Es ist weiterhin bevorzugt, dass die sich jeweils gegenüberliegenden Teilabschnitte der ersten bzw. der zweiten Fläche 8, 12 der Dichtbandstreifen 22, die mit der ersten Sperrschicht 6 oder der zweiten Sperrschicht 10 versehen sind, nach dem Umklappen miteinander verbunden werden. Dies kann insbesondere dadurch geschehen, dass die Dichtbandstreifen 22 vor dem Verbinden erwärmt werden, so dass das Material der ersten Sperrschicht 6 und der zweiten Sperrschicht 10 auf eine Temperatur oberhalb ihrer jeweiligen Schmelztemperatur erwärmt werden. Abhängig vom verwendeten Material der jeweiligen Sperrschicht 6, 10 sind hier dieselben Möglichkeiten gegeben, wie sie eingangs zum Verbinden der Sperrschichten 6, 10 mit der Schaumstoffbahn 4 beschrieben sind.

Das Erwärmen des Materials der ersten Sperrschicht 6 und/oder der zweiten Sperrschicht 10 ist besonders einfach und gleichmäßig möglich, wenn die gesamte Schaumstoffbahn 4 vor dem Umklappen der Dichtbandstreifen 22 erwärmt wird. Die Dichtbandstreifen 22 werden dann unmittelbar nach dem Umklappen zur Schaumstoff-Sperrschicht-Bahn 32 miteinander verbunden. Es ist aber auch möglich, erst die Schaumstoff-Sperrschicht-Bahn 32 nach dem Umklappen der Dichtbandstreifen 22 zu erwärmen. Dabei kann es ausreichend sein, wenn nur Randbereiche der Sperrschichten 6, 10 erwärmt werden, solange dies ein zuverlässiges Verbinden der Dichtbandstreifen 22 zur Schaumstoff-Sperrschicht-Bahn 32 gewährleistet.

Weiterhin werden die Dichtbandstreifen 22 der Schaumstoff-Sperrschicht-Bahn 32 vorzugsweise nach dem Erwärmen aneinander gedrückt. Ein Druck wird dabei in Querrichtung auf die Schaumstoff-Sperrschicht-Bahn senkrecht zu den Teilabschnitten der ersten und der zweiten Fläche 8, 12 bzw. senkrecht zu den Teilabschnitten der ersten und zweiten Sperrschicht 6, 10 aufgebracht. Durch den Druck werden die miteinander zu verbindenden Dichtbandstreifen 22 flächig aneinander gedrückt, um eine zuverlässige und möglichst vollständige Verbindung zu erreichen. Hierfür können bereits geringe Drücke ausreichen.

Alternativ kann zusätzlich zum Erwärmen der Dichtbandstreifen 22 oder anstelle des Erwärmens der Dichtbandstreifen 22 ein zusätzliches Verbindungsmittel, beispielsweise ein Klebstoff, zwischen die Dichtbandstreifen 22 eingebracht werden.

Falls die ursprüngliche Schaumstoffbahn 4 noch nicht imprägniert war, kann der Schritt des Imprägnierens hier nachgeholt werden. Dies erfolgt üblicherweise mittels Walzen in einem Tauchbad eines Imprägniermittels, Ausquetschen überschüssigen Imprägnats und anschließendem Trocknen unter Wärmezufuhr. Die Imprägnierung ist auch an anderen Stellen des Prozesses möglich.

Durch das Umklappen der Dichtbandstreifen 22 ändert sich die Breite des weiterzuverarbeitenden Gebildes von der Breite der Schaumstoffbahn 4 zu der Breite der Schaumstoff-Sperrschicht-Bahn 32. In einer bevorzugten Ausführungsform sind der mindestens eine erste Schnitt 18 und der mindestens eine zweite Schnitt 20 derart zueinander beabstandet in die Schaumstoffbahn 4 eingebracht, dass die Breite der Schaumstoff-Sperrschicht-Bahn 32 kleiner ist als die Breite der Schaumstoffbahn 4. Es kann daher wünschenswert sein, vor den weiteren Schritten mindestens zwei Schaumstoff-Sperrschicht-Bahnen 32 nebeneinander anzuordnen und unter Umständen miteinander zu verbinden. Dabei ist es besonders bevorzugt, wenn eine zusammengefügte Schaumstoff-Sperrschicht-Bahn 32 erzielt wird, deren Breite der Breite der Schaumstoffbahn 4 entspricht. Auf diese Weise bleibt die Gesamtbreite des zu verarbeitenden Gebildes während des gesamten Verfahrens im Wesentlichen konstant. Im Folgenden kann es sich daher auch stets um eine aus mehreren Schaumstoff-Sperrschicht-Bahnen 32 zusammengefügte Schaumstoff-Sperrschicht-Bahn 32 handeln.

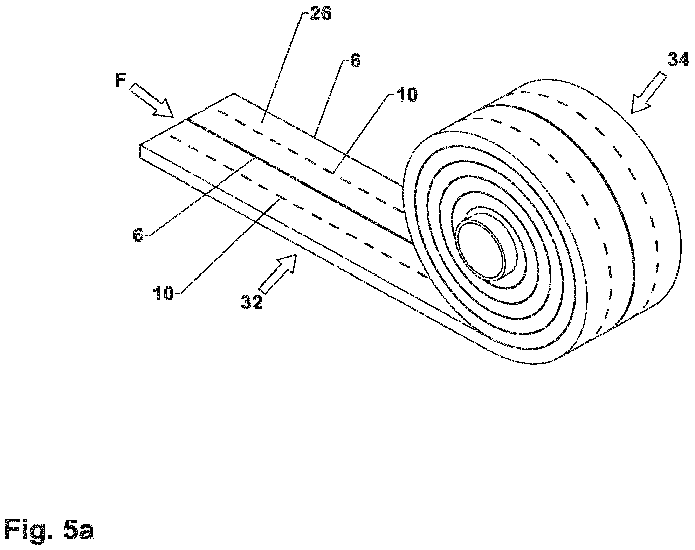

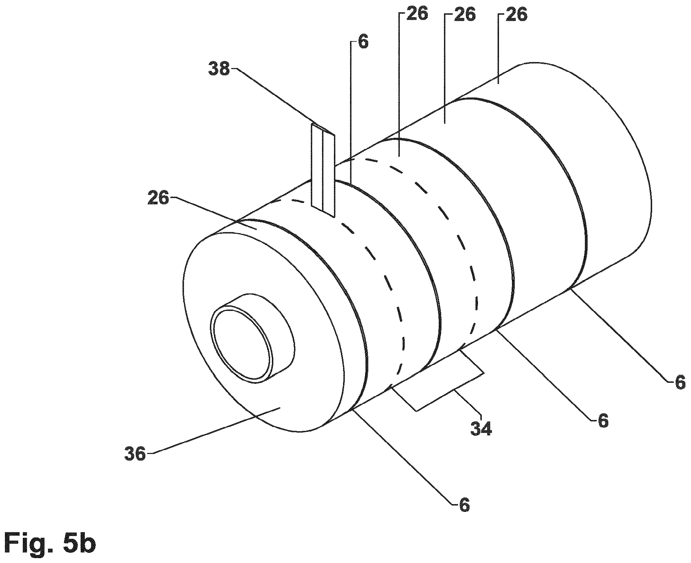

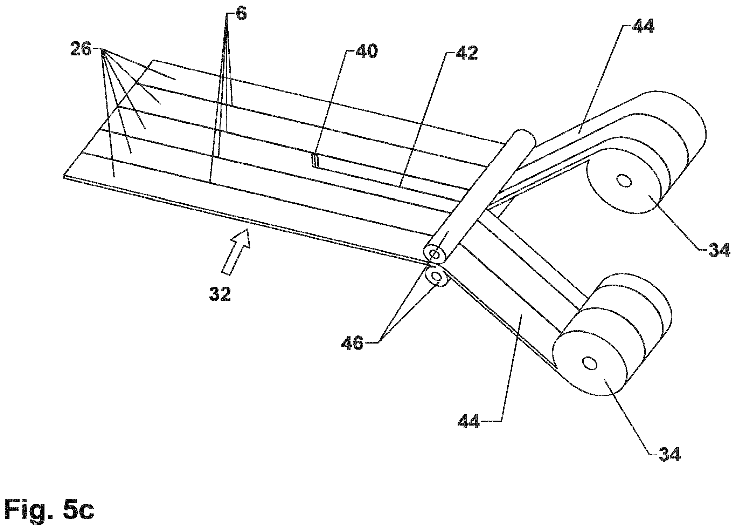

Aus der Schaumstoff-Sperrschicht-Bahn 32 wird schließlich mindestens eine Dichtbandrolle 34 gebildet. Dazu stehen im Wesentlichen drei alternative Verfahren zur Verfügung, die in Bezug auf Fig. 5a, 5b und 5c beschrieben sind.

Entspricht die Schaumstoff-Sperrschicht-Bahn 32 bereits den Anforderungen an das herzustellende Dichtband, insbesondere im Hinblick auf die Breite und die Anzahl der innenliegenden Sperrschichten, kann die in der Förderrichtung F transportierte Schaumstoff-Sperrschicht-Bahn 32 unmittelbar zu einer Dichtbandrolle 34 aufgewickelt werden, wie in Fig. 5a dargestellt ist. Die Dichtbandrolle 34 weist mindestens eine aus der ersten Sperrschicht 6 gebildete innenliegende Sperrschicht auf, die in radialer Richtung der Dichtbandrolle 34 verläuft und axial zwischen zwei Schaumstoffstreifen 26 aufgenommen ist. IN der Regel sind mehrere Sperrschichten durch die erste Sperrschicht 6 gebildet und es können auch zudem eine oder mehrere Sperrschichten durch die zweite Sperrschicht 10 gebildet sein.

Ist die Schaumstoff-Sperrschicht-Bahn 32 breiter als das herzustellende Dichtband und/oder weist mehr innenliegende Sperrschichten auf als die herzustellende Dichtbandrolle 34 aufweisen soll, kann die Schaumstoff-Sperrschicht-Bahn 32 zunächst zu einer Zwischenrolle 36 aufgewickelt werden. Wie in Fig. 5b dargestellt, wird die Zwischenrolle 36 an einer oder an mehreren Stellen in axialer Richtung durchtrennt, um eine Mehrzahl von Dichtbandrollen 34 zu erzeugen, die weniger breit sind als die Zwischenrolle 36. Vorzugsweise wird das Durchtrennen der Zwischenrolle 36 mittels einer oder mehrerer paralleler Sägen 38 durchgeführt. In Fig. 5b ist nur eine Säge 38 dargestellt und ein weiterer paralleler Schnitt zum Durchtrennen der Zwischenrolle 36 ist gestrichelt angedeutet. Der mindestens eine Schnitt zum Durchtrennen der Zwischenrolle 36 wird dabei bevorzugt in einen Schaumstoffstreifen 26 eingebracht, um die innenliegenden Sperrschichten nicht zu beschädigen. Auch hier können andere geeignete Verfahren zum Durchtrennen verwendet werden (z.B. Messer, beheizte Drähte, Laserschneiden, Wasserstrahlschneiden).

Die Zwischenrolle 36 wird derart in Dichtbandrollen 34 geschnitten, dass sich Schaumstoffstreifen 26 und die mindestens eine erste Sperrschicht 6 in axialer Richtung der Dichtbandrolle 34 abwechseln. Dabei ist in einer Dichtbandrolle 34 jede radial verlaufende erste Sperrschicht 6 zwischen zwei Schaumstoffstreifen 26 aufgenommen, wodurch das Dichtband eine erhöhte Abdichtung gegen Luftzug und/oder Dampfdiffusion aufweist und jede Sperrschicht 6 gleichzeitig vor äußerer Beschädigung geschützt ist. Ist der mindestens eine erste Schnitt 18 und/oder der mindestens eine zweite Schnitt 20 derart in die Schaumstoffbahn 4 eingebracht, dass er diese nicht vollständig durchtrennt, bedecken die verbleibenden Schaumstoffstege die zwischen den Dichtbandstreifen 22 aufgenommen Abschnitte der ersten bzw. zweiten Sperrschicht 6, 10, so dass, je nach Wickelrichtung, im aufgerollten Zustand der Dichtbandrolle 34 oder der Zwischenrolle 36 nach außen hin nur eine oder keine aus erster Sperrschicht 6 und zweiter Sperrschicht 10 zu sehen ist.

Fig. 5c zeigt eine weitere Möglichkeit der finalen Bearbeitung der Schaumstoff-Sperrschicht-Bahn 32 zur Herstellung von Dichtbandrollen 34. Dabei wird bei dieser Variante die Schaumstoff-Sperrschicht-Bahn 32 mittels eines oder mehrerer Messer 40 oder Sägen im Bereich mindestens eines Schaumstoffstreifens 26 in Längsrichtung durchtrennt. Hierdurch wird mindestens ein Schnitt 42 in die Schaumstoff-Sperrschicht-Bahn 32 eingefügt, wodurch mindestens zwei Schaumstoff-Sperrschicht-Streifen 44 erzeugt werden. Jeder Schaumstoff-Sperrschicht-Streifen 44 kann dann anschließend zu einer fertigen Dichtbandrolle 34 aufgewickelt werden. Auf diese Weise kann der in Fig. 5b dargestellte Schritt des Zerteilens einer Zwischenrolle 36 entfallen.

In allen Ausführungsformen wird die Schaumstoff-Sperrschicht-Bahn 32 bzw. die Schaumstoff-Sperrschicht-Streifen 44 vor dem Aufwickeln zu einer Dichtbandrolle 34 komprimiert. Dies kann entweder durch vorgelagerte Kompressionswalzen geschehen oder durch einen während des Aufwickelns ausgeübten Druck auf die Schaumstoff-Sperrschicht-Bahn 32 bzw. die Schaumstoff-Sperrschicht-Streifen 44. Entsprechende Kompressionswalzen 46 sind beispielsweise in Fig. 5c dargestellt.

Bei allen drei Ausführungsbeispielen nach den Fig. 5a bis 5c kann auf die Schaumstoff-Sperrschicht-Bahn 32 eine Klebeschicht auf einer quer zu den Sperrschichten 6, 10 angeordneten Fläche der Schaumstoff-Sperrschicht-Bahn 32 aufgebracht werden. Im Ausführungsbeispiel nach Fig. 5c kann das Aufbringen der Klebeschicht auch erst nach dem Bilden der Schaumstoff-Sperrschicht-Streifen 44 auf selbige erfolgen. Die Klebeschicht ist vorzugsweise als ein einseitig mit einer Abziehfolie kaschiertes doppelseitiges Klebeband ausgebildet. Das Klebeband ist wiederum auf einer Spule oder Rolle gelagert und wird von dieser abgezogen. Vorzugsweise erfolgt das Aufbringen des Klebebands auf die Schaumstoff-Sperrschicht-Bahn 32 gleichzeitig mit dem Aufwickeln der Schaumstoff-Sperrschicht-Bahn 32 zur Zwischenrolle 36 oder zur Dichtbandrolle 34, wobei die Kompressionswalzen 46 den Druck zur Verbindung von Klebeband und Schaumstoff-Sperrschicht-Bahn 38 bzw. Schaumstoff-Sperrschicht-Streifen 44 erzeugen.

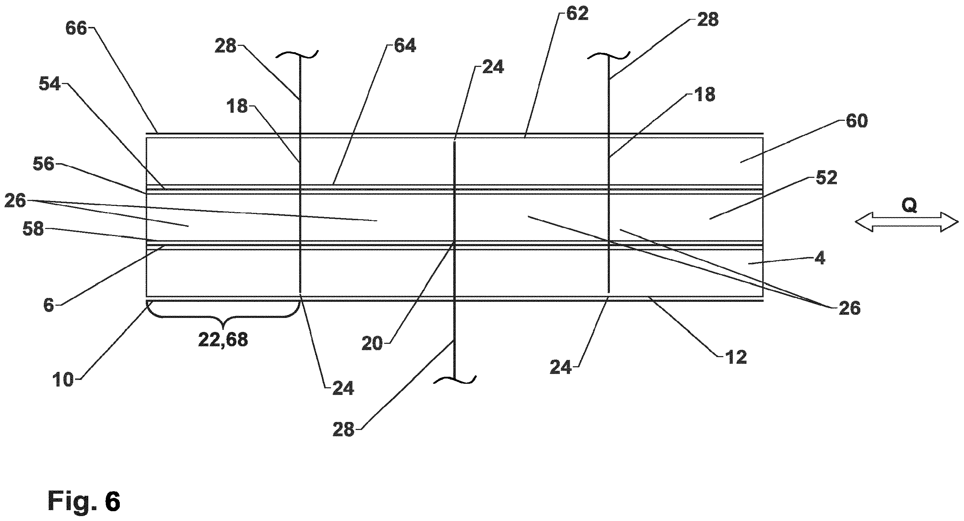

Anhand der Figuren 6 bis 8 ist ein alternatives Ausführungsbeispiel des Verfahrens beschrieben.

Wie in Fig. 6 zu sehen ist, wird zunächst auch in dieser Ausführungsform die Schaumstoffbahn 4, die einer ersten Schaumstoffbahn 4 entspricht, bereitgestellt und die erste Sperrschicht 6 wird auf die erste Fläche 8 aufgebracht. Außerdem wird auch die zweite Sperrschicht 10 auf die zweite Fläche 12 der ersten Schaumstoffbahn 4 aufgebracht. Anschließend folgen die Schritte des Aufbringens einer zweiten Schaumstoffbahn 52 auf die erste Sperrschicht 6. Vorzugsweise wird eine dritte Sperrschicht 54 auf eine erste Fläche 56 der zweiten Schaumstoffbahn 52 aufgebracht. Die erste Fläche 56 der zweiten Schaumstoffbahn 52 entspricht in diesem Beispiel einer Oberfläche der zweiten Schaumstoffbahn 52, während eine zweite Fläche 58 der zweiten Schaumstoffbahn 52 einer Unterseite derselben entspricht. Die zweite Fläche 58 der zweiten Schaumstoffbahn 52 steht flächig mit der ersten Sperrschicht 6 in Kontakt.

Auf die dritte Sperrschicht 54 kann weiterhin eine dritte Schaumstoffbahn 60 aufgebracht werden. Die dritte Schaumstoffbahn 60 weist eine erste Fläche 62 und eine zweite Fläche 64 auf, wobei die erste Fläche 62 einer Oberseite und die zweite Fläche 64 einer Unterseite der dritten Schaumstoffbahn 60 entsprechen. Die zweite Fläche 64 der dritten Schaumstoffbahn 60 steht flächig mit der dritten Sperrschicht 54 in Kontakt. Schließlich wird auf der ersten Fläche 62 der dritten Schaumstoffbahn 60 eine vierte Sperrschicht 66 aufgebracht wird. Jede Sperrschicht 6, 10, 54, 66 ist mit der angrenzenden Schaumstoffbahn bzw. den angrenzenden Schaumstoffbahnen 4, 52, 60, verbunden. Bezüglich der Materialien der Sperrschichten und des Verbindens einer Sperrschicht mit einer Schaumstoffbahn wird auf die Ausführungen zur ersten Sperrschicht 6 und zum Verbinden derselben mit der Schaumstoffbahn 4 verwiesen.

Das Aufbringen weiterer Schaumstoffbahnen und Sperrschichten kann beliebig oft wiederholt werden, um einen mehrlagigen Schaumstoffbahn-Sperrschicht-Stapel zu erzeugen. Nach dem Erzeugen des mehrlagigen Schaumstoffbahn-Sperrschicht-Stapels gewünschter Dicke wird das Verfahren gemäß Fig. 6 fortgeführt.

Fig. 6 zeigt den Schritt des Einbringens mindestens eines ersten Schnitts 18 und mindestens eines zweiten Schnitts 20 in den mehrlagigen Schaumstoffbahn-Sperrschicht-Stapel. Der mindestens eine erste Schnitt 18 wird auch hier in die erste Fläche 8 der ersten Schaumstoffbahn 4 eingebracht und der mindestens eine zweite Schnitt 20 wird auch hier in die zweite Fläche 12 der ersten Schaumstoffbahn 4 eingebracht. Genauer wird der mindestens eine erste Schnitt 18 ausgehend von der ersten Fläche der obersten Schaumstoffbahn, hier der ersten Fläche 62 der dritten Schaumstoffbahn 60, in den Schaumstoffbahn-Sperrschicht-Stapel eingebracht. Der zweite Schnitt 20 wird ausgehend von der zweiten Fläche der untersten Schaumstoffbahn, hier der zweiten Fläche 12 der ersten Schaumstoffbahn 4, in den Schaumstoffbahn-Sperrschicht-Stapel eingebracht. Durch das Einbringen des mindestens einen ersten Schnitts 18 und des mindestens einen zweiten Schnitts 20 in Längsrichtung der Schaumstoffbahnen 4, 52, 60 werden parallel verlaufende Dichtbandabschnitte 68 gebildet. Zwischen zwei aneinander angrenzenden Dichtbandabschnitten 68 verbleibt ein Verbindungsabschnitt 24.

Es ist ersichtlich, dass das Einbringen des mindestens einen ersten Schnitts 18 und das Einbringen des mindestens einen zweiten Schnitts 20 auf dieselbe Weise erfolgt, wie mit Bezug auf Fig. 2 bezüglich des ersten Ausführungsbeispiels beschrieben ist.

Die Dichtbandabschnitte 68 sind in diesem Ausführungsbeispiel aus mehreren übereinander angeordneten Dichtbandstreifen 22 gebildet. Jeder Dichtbandabschnitt 68 besteht folglich aus einer Mehrzahl von Schaumstoffstreifen 4, 52, 60 und einer Mehrzahl von Sperrschichten 6, 10, 54, 66. Die an einen ersten Schnitt 18 angrenzenden Dichtbandabschnitte 68 sind durch einen Verbindungsabschnitt 24 im Bereich der zweiten Fläche der untersten Schaumstoffbahn, hier der zweiten Fläche 12 der ersten Schaumstoffbahn 4, miteinander verbunden. Die an einen zweiten Schnitt 20 angrenzenden Dichtbandabschnitte 68 sind durch einen Verbindungsabschnitt 24 im Bereich der ersten Fläche der obersten Schaumstoffbahn, hier der ersten Fläche 62 der dritten Schaumstoffbahn 60, miteinander verbunden. Jeder Verbindungsabschnitt 24 kann einen Schaumstoffsteg umfassen oder nur durch die jeweils im Verbindungsabschnitt 24 angeordnete Sperrschicht 6, 66 gebildet sein.

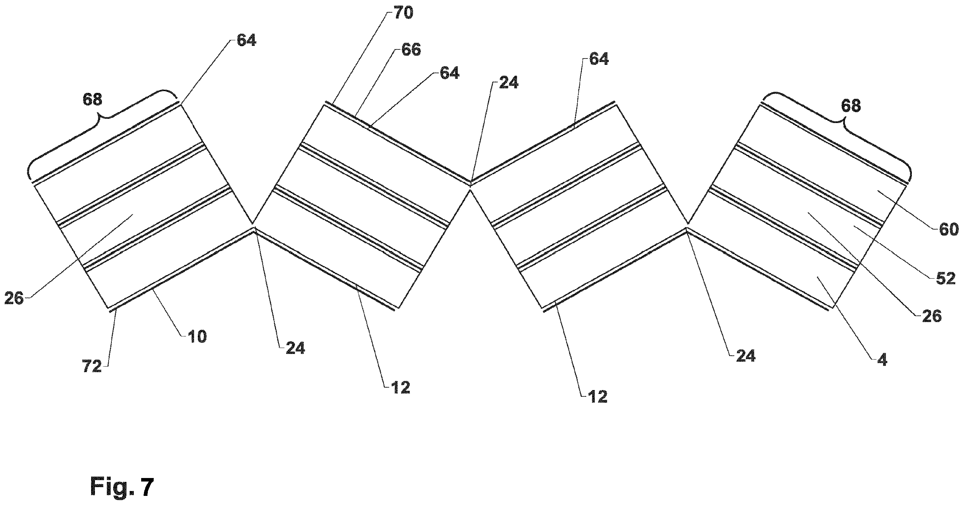

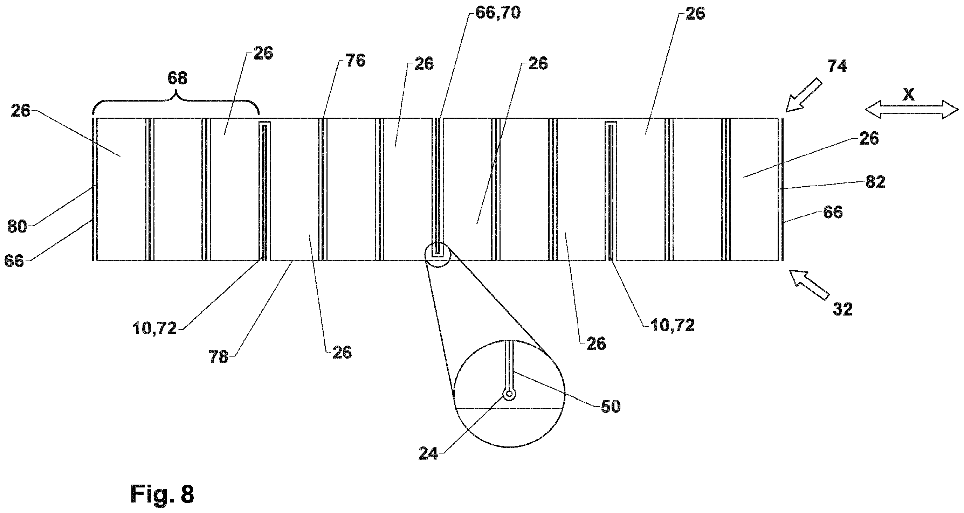

In Fig. 7 ist der Schritt des Umklappens der beim Schneiden erzeugten Dichtbandabschnitte 68 dargestellt. Das Umklappen der Dichtbandabschnitte 68 erfolgt im Bereich der Verbindungsabschnitte 24 zur Herstellung einer Schaumstoff-Sperrschicht-Bahn, wie sie in Fig. 8 dargestellt ist. Das heißt, dass auch hier die Dichtbandstreifen 22, aus denen ein jeder Dichtbandabschnitt gebildet ist, im Bereich der Verbindungsabschnitte 24 umgeklappt werden.

Die Dichtbandabschnitte 68 werden derart umgeklappt, dass sich Teilabschnitte der ersten Fläche 8 der untersten Schaumstoffbahn 4, die jeweils an einen gemeinsamen Verbindungsabschnitt 24 angrenzen, gegenüberliegen und sich Teilabschnitte der zweiten Fläche 64 der obersten Schaumstoffbahn 60, die jeweils an einen gemeinsamen Verbindungsabschnitt 24 angrenzen, gegenüberliegen. Im Übrigen treffen auch hier die Ausführungen zu Fig. 3 mit dem Unterschied zu, dass anstelle eines Dichtbandstreifens 22 ein mehrlagiger Dichtbandabschnitt 68 tritt.

Die beiden im Bereich der ersten Fläche der obersten Schaumstoffbahn, hier der ersten Fläche 62 der dritten Schaumstoffbahn 60, an einen gemeinsamen Verbindungsabschnitt 24 angrenzenden Teilabschnitte der Sperrschicht bilden jeweils einen ersten Sperrschichtabschnitt 70, der nach dem Umklappen der Dichtbandabschnitte 68 zwischen zwei Dichtbandabschnitten 68 aufgenommen ist. Die beiden im Bereich der zweiten Fläche der untersten Schaumstoffbahn, hier der zweiten Fläche 12 der ersten Schaumstoffbahn 4, an einen gemeinsamen Verbindungsabschnitt 24 angrenzenden Teilabschnitte der Sperrschicht bilden jeweils einen zweiten Sperrschichtabschnitt 72, der nach dem Umklappen der Dichtbandabschnitte 68 zwischen zwei Dichtbandabschnitten 68 aufgenommen ist.

Es ist ersichtlich, dass bei der Ausführungsform nach Fig. 2 bis 4 der mindestens eine erste Sperrschichtabschnitt 70 Teil der ersten Sperrschicht 6 und der mindestens eine zweite Sperrschichtabschnitt 72 Teil der zweiten Sperrschicht 10 ist.

Fig. 8 zeigt eine durch Umklappen gemäß Fig. 7 erzeugte Schaumstoff-Sperrschicht-Bahn 32, die aus einer Mehrzahl von nebeneinander angeordneten Dichtbandabschnitten 68 besteht. Wie zu erkennen ist, bilden der mindestens eine erste Sperrschichtabschnitt 70 und der mindestens eine zweite Sperrschichtabschnitt 72 nun Sperrschichten, die zwischen zwei aneinander angrenzenden Dichtbandabschnitten 68 aufgenommen sind. Zudem beinhaltet jeder Dichtbandabschnitt noch weitere Sperrschichten, die aus den umgeklappten Teilabschnitten der ersten und dritten Sperrschicht 6, 54 bestehen. Es ist bevorzugt, dass die Dichtbandabschnitte 68 entsprechend den Dichtbandstreifen 22 der Ausführungsform nach Fig. 4 nach dem Umklappen miteinander verbunden werden. Vorzugsweise werden die Dichtbandabschnitte 68 dazu vor dem Umklappen, alternativ auch erst nach dem Umklappen erwärmt.

Analog zu den Fig. 5a bis 5c kann auch aus der Schaumstoff-Sperrschicht-Bahn 32 nach Fig. 8 mindestens eine Dichtbandrolle gebildet werden. Hierzu kann die Schaumstoff-Sperrschicht-Bahn 32 entweder unmittelbar zu einer Dichtbandrolle 34 aufgewickelt werden, zu einer Zwischenrolle 36 aufgewickelt werden, die an mehreren Stellen in axialer Richtung zur Bildung einer Mehrzahl von Dichtbandrollen 34 durchtrennt wird, oder durch Einbringen mindestens eines Schnitts 42 in die Schaumstoff-Sperrschicht-Bahn 32 in eine Mehrzahl von Schaumstoff-Sperrschicht-Streifen 44 getrennt werden, die anschließend zu einzelnen Dichtbandrollen 34 aufgewickelt werden. Details zur Herstellung von Dichtbandrollen aus der Schaumstoff-Sperrschicht-Bahn 32 sind der Beschreibung zu den Fig. 5a bis 5c zu entnehmen.

Schließlich wird unter Bezugnahme auf die Fig. 4 und 8 ein erfindungsgemäßes Dichtelement beschrieben. Das Dichtelement kann ein zu einer Dichtbandrolle 34 aus weichem, komprimierbarem Schaumstoff mit mindestens einer in radialer Richtung verlaufenden Sperrschicht aufzurollendes Dichtband sein. Das Dichtelement kann aber auch die Schaumstoff-Sperrschicht-Bahn 32 sein, aus der im weiteren Verlauf eine Dichtbandrolle gebildet wird.

Das Dichtelement 74 aus Weichschaum weist eine Oberseite 70, eine Unterseite 78 und zwei die Oberseite 76 und die Unterseite 78 verbindende Seitenflanken 80, 82 auf. Ferner umfasst das Dichtelement 74 mindestens drei Dichtbandabschnitte 68. Die Dichtbandabschnitte 68 können jeweils einen oder mehrere Dichtbandstreifen 22 umfassen. Die Dichtbandabschnitte sind in einer Funktionsrichtung des Dichtelements 74 nebeneinander angeordnet sind. Die Funktionsrichtung ist parallel zu der Ober- und der Unterseite 76, 78 sowie senkrecht zu den Seitenflanken 80, 82 ausgerichtet und in Fig. 8 durch den Pfeil X gekennzeichnet.

Mindestens ein erster Sperrschichtabschnitt 70 und mindestens ein zweiter Sperrschichtabschnitt 72 sind jeweils zwischen zwei aneinander angrenzenden Dichtbandabschnitten 68 aufgenommen. Der mindestens eine erste Sperrschichtabschnitt 70 und der mindestens eine zweite Sperrschichtabschnitt 72 verbinden die jeweils angrenzenden Dichtbandabschnitte 68 miteinander und verlaufen parallel zu den Seitenflanken 80, 82 im Dichtelement 74. Umfassen die Dichtbandabschnitte 68 jeweils mehrere Dichtbandstreifen 22, sind in jedem Dichtbandabschnitt zudem weitere parallel zu den Seitenflanken 80, 82 verlaufende Sperrschichtabschnitte 6, 54 aufgenommen.

In einem Einbauzustand, in dem das Dichtelement 74 in eine Fuge zwischen einem Rahmenelement und einem Mauerwerk aufgenommen ist, liegen die Oberseite 76 und die Unterseite 78 an den eine Fuge bildenden gegenüberliegenden Oberflächen des Rahmenelements und des Mauerwerks an. Die Sperrschichtabschnitte 70, 72 erstrecken sich quer durch die Fuge vom Rahmenelement zum Mauerwerk. Dies wird dadurch verdeutlicht, dass die Funktionsrichtung X senkrecht zu den Ebenen des ersten Sperrschichtabschnitts 70 und des zweiten Sperrschichtabschnitts 72 ausgerichtet ist.

Der mindestens eine erste Sperrschichtabschnitt 70 und der mindestens eine zweite Sperrschichtabschnitt 72 bilden jeweils eine Schlaufe 50 zwischen den angrenzenden Dichtbandabschnitten 68. Erfindungsgemäß bildet dabei der mindestens eine erste Sperrschichtabschnitt 70 die Schlaufe 50 im Bereich der Unterseite 78 des Dichtelements 74 und der mindestens eine zweite Sperrschichtabschnitt 72 bildet die Schlaufe 50 im Bereich der Oberseite 76 des Dichtelements 74. Erfindungsgemäß weist das Dichtelement 74 mehrere erste Sperrschichtabschnitte 70 und/oder mehrere zweite Sperrschichtabschnitte 72 auf, wobei sich in Funktionsrichtung X betrachtet immer ein erster Sperrschichtabschnitt 70 und ein zweiter Sperrschichtabschnitt 72 abwechseln. Dies liegt darin begründet, dass vorzugsweise auch der mindestens eine erste Schnitt 18 und der mindestens eine zweite Schnitt 20 in Querrichtung Q der Schaumstoffbahn 4 abwechselnd eingebracht sind.

Die Schlaufe 50 wird durch das Umklappen der Dichtbandabschnitte 68 und dem damit einhergehenden Umklappen der Sperrschichtabschnitte 70, 72 gebildet. Jede Schlaufe 50 weist zwei im Wesentlichen parallel verlaufende Schenkel und eine die Schenkel verbindende Krümmung auf. Die Schenkel der Schlaufe 50 werden durch die Teilabschnitte des ersten bzw. zweiten Sperrschichtabschnitts 70, 72 gebildet, die flächig an dem jeweils angrenzenden Schaumstoffstreifen 26 anliegen. Im Bereich des Verbindungsabschnitts 24 bilden die Sperrschichtabschnitte 70, 72 nach dem Umklappen der Dichtbandabschnitte 68 eine Krümmung, sodass die zwei Schenkel der Schlaufe 50 aneinander zu liegen kommen.

Zur Verbindung zweier aneinander angrenzender Dichtbandabschnitte 68 sind die zwei Schenkel der Schlaufe 50 miteinander verhaftet. Vorzugsweise sind die Schenkel der Schlaufe 50 vollflächig miteinander verhaftet. Eine teilweise Verhaftung kann jedoch zur Verbindung der Dichtbandabschnitte 68 ausreichen. Wird ausreichend Druck in Funktionsrichtung X auf die Schaumstoff-Sperrschicht-Bahn 32 ausgeübt, kann die Schlaufe 50 auch im Bereich der Krümmung verhaftet sein.

Zur Bildung des Dichtelements 74 ist es besonders bevorzugt, dass der mindestens eine erste Sperrschichtabschnitt 70 und der mindestens eine zweite Sperrschichtabschnitt 72 eine Folie aufweisen. Mögliche Materialien einer solchen Folie sind bereits unter Bezugnahme auf die Materialien der ersten und der zweiten Sperrschicht 6, 10 beschrieben.

## Patentansprüche

1. Dichtelement (74) aus Weichschaum mit
einer Oberseite (76), einer Unterseite (78) und zwei die Oberseite (76) und die Unterseite (78) verbindenden Seitenflanken (80, 82);
mindestens drei Dichtbandabschnitten (68), die in einer Funktionsrichtung (X) des Dichtelements (74) nebeneinander angeordnet sind, wobei sich die Funktionsrichtung (X) parallel zu der Ober- und der Unterseite (76, 78) sowie senkrecht zu den Seitenflanken (80, 82) erstreckt;
mindestens einem ersten Sperrschichtabschnitt (70) und mindestens einem zweiten Sperrschichtabschnitt (72), die jeweils zwischen zwei aneinander angrenzenden Dichtbandabschnitten (68) aufgenommen sind und die dazu eingerichtet sind, den Durchtritt von Luft und/oder Wasserdampf durch das Dichtelement zu reduzieren;
wobei der mindestens eine erste Sperrschichtabschnitt (70) und der mindestens eine zweite Sperrschichtabschnitt (72) jeweils die angrenzenden Dichtbandabschnitte (68) miteinander verbinden und parallel zu den Seitenflanken (80, 82) im Dichtelement (74) verlaufen; und
wobei der mindestens eine erste Sperrschichtabschnitt (70) und der mindestens eine zweite Sperrschichtabschnitt (72) jeweils eine Schlaufe (50) zwischen den angrenzenden Dichtbandabschnitten (68) bilden;
**dadurch gekennzeichnet, dass**
der mindestens eine erste Sperrschichtabschnitt (70) die Schlaufe (50) im Bereich der Unterseite (78) des Dichtelements (74) bildet und der mindestens eine zweite Sperrschichtabschnitt (72) die Schlaufe (50) im Bereich der Oberseite (76) des Dichtelements (74) bildet; und
das Dichtelement (74) mehrere erste und/oder mehrere zweite Sperrschichtabschnitte (70, 72) aufweist, wobei sich in Funktionsrichtung (X) betrachtet immer ein erster Sperrschichtabschnitt (70) und ein zweiter Sperrschichtabschnitt (72) abwechseln.

2. Dichtelement (74) nach Anspruch 1, **dadurch gekennzeichnet, dass** der mindestens eine erste Sperrschichtabschnitt (70) und der mindestens eine zweite Sperrschichtabschnitt (72) eine Folie aufweisen.

3. Dichtelement (74) nach Anspruch 1 oder 2, **dadurch gekennzeichnet, dass** jede Schlaufe (50) zwei im Wesentlichen parallel verlaufende Schenkel und eine die Schenkel verbindende Krümmung aufweist, wobei die zwei Schenkel miteinander verhaftet sind.

## Claims

1. A seal element (74) made from flexible foam comprising
a top side (76), a bottom side (78) and two side flanks (80, 82) which connect the top side (76) and the bottom side (78);
at least three sealing band sections (68) which are arranged next to one another in a functional direction (X) of the seal element (74), the functional direction (X) extending parallel to the top and the bottom side (76, 78) and perpendicularly with respect to the side flanks (80, 82);
at least one first barrier layer section (70) and at least one second barrier layer section (72) which are received in each case between two sealing band sections (68) which adjoin one another, and which are configured to reduce the passage of air and/or water vapour through the seal element;
wherein the at least one first barrier layer section (70) and the at least one second barrier layer section (72) in each case connect the adjoining sealing band sections (68) to one another and run parallel to the side flanks (80, 82) in the seal element (74);
wherein the at least one first barrier layer section (70) and the at least one second barrier layer section (72) in each case form a loop (50) between the adjoining sealing band sections (68);
**characterized in that**
the at least one first barrier layer section (70) forms the loop (50) in the region of the bottom side (78) of the seal element (74), and the at least one second barrier layer section (72) forms the loop (50) in the region of the top side (76) of the seal element (74), and
the seal element (74) has a plurality of first and/or a plurality of second barrier layer sections (70, 72), a first barrier layer section (70) and a second barrier layer section (72) always alternating in the functional direction (X).

2. The seal element (74) according to claim 1, **characterized in that** the at least one first barrier layer section (70) and the at least one second barrier layer section (72) comprise a film.

3. The seal element (74) according to claim 1 or 2, **characterized in that** each loop (50) has two limbs which run substantially in parallel and a curvature which connects the limbs, wherein the two limbs are bonded to one another.

## Revendications

1. Élément d'étanchéité (74) en mousse souple comportant
une face supérieure (76), une face inférieure (78) et deux flancs latéraux (80, 82) reliant la face supérieure (76) et la face inférieure (78) ;
au moins trois tronçons de ruban d'étanchéité (68), qui sont disposés côte à côte dans une direction fonctionnelle (X) de l'élément d'étanchéité (74), la direction fonctionnelle (X) s'étendant parallèlement à la face supérieure et la face inférieure (76, 78) ainsi que perpendiculairement aux flancs latéraux (80, 82) ;
au moins un premier tronçon de couche de blocage (70) et au moins un second tronçon de couche de blocage (72), qui sont logés chacun entre deux tronçons de ruban d'étanchéité (68) adjacents l'un à l'autre et qui sont agencés pour réduire le passage d'air et/ou de vapeur d'eau à travers l'élément d'étanchéité ;
ledit au moins un premier tronçon de couche de blocage (70) et ledit au moins un second tronçon de couche de blocage (72) reliant chacun entre eux les tronçons de ruban d'étanchéité (68) adjacents et s'étendant dans l'élément d'étanchéité (74) parallèlement aux flancs latéraux (80, 82) ; et
ledit au moins un premier tronçon de couche de blocage (70) et ledit au moins un second tronçon de couche de blocage (72) formant chacun une boucle (50) entre les tronçons de ruban d'étanchéité (68) adjacents ;
**caractérisé en ce que**
ledit au moins un premier tronçon de couche de blocage (70) forme la boucle (50) dans la zone de la face inférieure (78) de l'élément d'étanchéité (74) et ledit au moins un second tronçon de couche de blocage (72) forme la boucle (50) dans la zone de la face supérieure (76) de l'élément d'étanchéité (74) ; et
l'élément d'étanchéité (74) comporte plusieurs premiers et/ou plusieurs seconds tronçons de couche de blocage (70, 72), un premier tronçon de couche de blocage (70) et un second tronçon de couche de blocage (72) alternant toujours considérés dans la direction fonctionnelle (X).

2. Élément d'étanchéité (74) suivant la revendication 1, **caractérisé en ce que** ledit au moins un premier tronçon de couche de blocage (70) et ledit au moins un second tronçon de couche de blocage (72) comprennent un film.

3. Élément d'étanchéité (74) suivant la revendication 1 ou 2, **caractérisé en ce que** chaque boucle (50) comporte deux ailes s'étendant essentiellement parallèlement et une partie courbe reliant les ailes, les deux ailes adhérant l'une avec l'autre.
